Europäisches Patentamt

European Patent Office

Office européen des brevets

(11) Numéro de publication : **0 340 088 B1**

# (12) FASCICULE DE BREVET EUROPEEN

(45) Date de publication du fascicule du brevet :
**15.04.92 Bulletin 92/16**

(51) Int. Cl.$^5$ : **F02K 9/34, F42B 10/04**

(21) Numéro de dépôt : **89401133.7**

(22) Date de dépôt : **21.04.89**

(54) **Propulseur composite à ailes composites intégrées et son procédé de fabrication.**

(30) Priorité : **25.04.88 FR 8805466**

(43) Date de publication de la demande :
**02.11.89 Bulletin 89/44**

(45) Mention de la délivrance du brevet :
**15.04.92 Bulletin 92/16**

(84) Etats contractants désignés :
**AT BE CH DE ES GB GR IT LI LU NL SE**

(56) Documents cités :
**DE-B- 1 116 577**
**FR-A- 255 650**

(73) Titulaire : **SOCIETE EUROPEENNE DE PROPULSION**
**24 rue Simon de Rothschild**
**F-92150 Suresnes (FR)**

(72) Inventeur : **Daffix, Louis D.**
**13, Avenue Montesquieu**
**F-33600 Pessac (FR)**
Inventeur : **Crapiz, Dino N.**
**28, reu Déhès**
**F-33160 Le Haillan (FR)**

(74) Mandataire : **Joly, Jean-Jacques et al**
**CABINET BEAU DE LOMENIE 55, rue d'Amsterdam**
**F-75008 Paris (FR)**

EP 0 340 088 B1

## Description

La présente invention concerne l'intégration d'ailes composites à une structure de propulseur composite.

Les efforts importants auxquels sont soumis les empennages des engins actuels du fait de leur forte manoeuvrabilité doivent généralement être repris par la virole du propulseur, ce qui pose le problème de la liaison mécanique entre les ailes et la virole.

Les propulseurs actuels possèdent des ancrages localisés sur lesquels viennent se fixer les ailes. Les efforts locaux résultants obligent soit à insérer des cadres dans les propulseurs, soit à épaissir localement la paroi de la virole. Outre des pertes en masse de propergol, et donc une diminution de performance, ces solutions induisent des inconvénients notables pour la réalisation des viroles, à cause de leur section variable, et ont donc une incidence notable sur le coût de fabrication. Par ailleurs, de telles architectures limitent la participation des ailes à la rigidité du propulseur.

Une amélioration peut être apportée par soudage des ailes sur la virole métallique du propulseur. Les renforts locaux peuvent alors être supprimés et les ailes participent mieux à la rigidité du propulseur. Toutefois, une telle solution est à l'évidence inapplicable dans le cas de propulseurs composites.

Des propulseurs composites équipés d'ailes composites ont été réalisés, mais les ailes sont fixées localement sur des cadres métalliques et l'on retrouve les inconvénients évoqués plus haut des propulseurs à ailes ancrées localement.

Le document FR-A-2 556 650 décrit un propulseur en matériau composite où les ailes sont intéfrées à la partie centrale par drapage à l'aide de feuilles de composite pré-imprégné débordant sur les ailes et la partie centrale, avant polymérisation.

Aussi, la présente invention a-t-elle pour but de fournir un procédé de fabrication de propulseur composite permettant une intégration d'ailes composites à la structure du propulseur de façon à faire participer les ailes à la rigidité du propulseur, et donc de gagner en masse de propergol, tout en conservant une structure lisse tant à l'intérieur qu'à l'extérieur.

Conformément à l'invention, le procédé de fabrication du propulseur comprend les étapes qui consistent à :

(a) réaliser séparément une préforme tubulaire, des ailes et des supports d'aile,

– les ailes et les supports d'aile étant réalisés par mise en forme au moins en partie par drapage de textures fibreuses imprégnées de liant polymérisable, suivi de la polymérisation du liant, tandis que la préforme tubulaire est réalisée au moins en partie par bobinage filamentaire avec imprégnation par un liant polymérisable,

– chaque support d'aile ayant une base destinée à être intégrée à la périphérie de la préforme tubulaire, et des parties d'attache d'aile faisant saillie de la base et espacées le long de celle-ci, et

– les bases des supports d'aile et la périphérie de la préforme tubulaire ayant des formes propres à assurer la continuité circonférentielle de la structure lorsque les bases sont intégrées à la préforme tubulaire,

(b) intégrer les supports d'aile à la préforme tubulaire en intégrant les bases des supports d'aile longitudinalement à la périphérie de la préforme tubulaire, ladite intégration étant réalisée par collage complété au moins par un surbobinage local aux emplacements des supports d'aile situés entre les parties d'attache des ailes, de sorte qu'une préforme de structure lisse intérieurement et extérieurement est obtenue,

(c) soumettre l'ensemble formé par la préforme tubulaire, les supports d'aile et le surbobinage à un traitement de polymérisation pour obtenir une virole, et

(d) assembler ensuite les ailes aux supports d'aile au moins par collage des flancs des ailes sur les parties d'attache des supports d'aile.

Ainsi, la liaison des ailes à la virole est-elle réalisée sans nécessiter l'adjonction de cadres métalliques et sans surépaississement notable de la virole, donc avec gain de masse du propergol contenu dans la virole. De plus, par l'intégration des bases des supports d'aile à la structure de la virole, les ailes participent à la rigidité du propulseur dans son ensemble.

Selon un mode particulier de mise en oeuvre du procédé conforme à l'invention, la base de chaque support d'aile présente des parties en retrait situées entre les parties d'attache des ailes et destinées à être disposées dans des gorges annulaires qui sont formées à la périphérie de la préforme tubulaire. Le surbobinage est alors réalisé dans les gorges de la préforme tubulaire, par dessus les parties en retrait des bases des supports d'ailes de manière à parfaire la liaison entre chaque support d'aile et la préforme tubulaire tout en assurant la continuité circonférentielle de la structure.

Selon un autre de ses aspects, la présente invention concerne également les propulseurs composites tels qu'ils peuvent être obtenus par le procédé défini ci-dessus.

Conformément à l'invention, un propulseur composite ayant une virole en matériau composite et des ailes en matériau composite reliées à la virole au moyen de supports d'aile est caractérisé en ce que chaque support d'aile est en matériau composite et comprend :

– une base intégrée à la virole en formant avec elle une structure présentant une continuité circonférentielle, l'intégration de la base à la virole étant réalisée par collage complété par un surbobinage local, et
– des parties d'attache faisant saillie de la base et sur lesquelles les flancs d'une aile sont assemblés au moins par collage.

D'autres particularités et avantages du procédé de fabrication de propulseur composite, et du propulseur composite conformes à l'invention ressortiront à la lecture de la description donnée ci-après, à titre indicatif mais non limitatif, en référence aux dessins annexés sur lesquels :
– la figure 1 est une vue longitudinale en coupe illustrant schématiquement une préforme tubulaire destinée à la fabrication d'une virole d'un propulseur composite conformément à l'invention,
– la figure 2 est une vue en coupe de la préforme suivant le plan II-II de la figure 1,
– la figure 3 est une vue en perspective à échelle agrandie illustrant partiellement un support d'aile destiné à être assemblé à la préforme de la figure 1,
– la figure 4 est une vue en coupe transversale illustrant la mise en place dans un outillage des textures fibreuses utilisées pour la mise en forme du support d'aile,
– la figure 5 est une vue partielle de détail en coupe longitudinale montrant le support d'aile de la figure 3 assemblé à la préforme de la figure 1,
– la figure 6 est une vue partielle en perspective montrant le support d'aile de la figure 3, assemblé à la préforme de la figure 1,
– la figure 7 est une vue en coupe d'une aile destinée à être assemblée à un support d'aile tel que celui de la figure 3, et
– la figure 8 est une vue en perspective montrant en partie un propulseur réalisé conformément à l'invention à partir de la préforme de la figure 1, de supports d'aile tels que celui de la figure 3 et d'ailes telles que celle de la figure 7.

D'une façon générale, la fabrication d'un propulseur composite conformément à l'invention comprend la réalisation d'une préforme tubulaire, de supports d'aile et d'ailes, séparément les uns des autres, l'assemblage des supports d'aile à la préforme tubulaire, la polymérisation de cet ensemble, et le montage des ailes sur les supports d'aile. Les supports d'aile et les ailes sont par exemple au nombre de deux, comme dans le mode de réalisation décrit ci-après, ou au nombre de quatre.

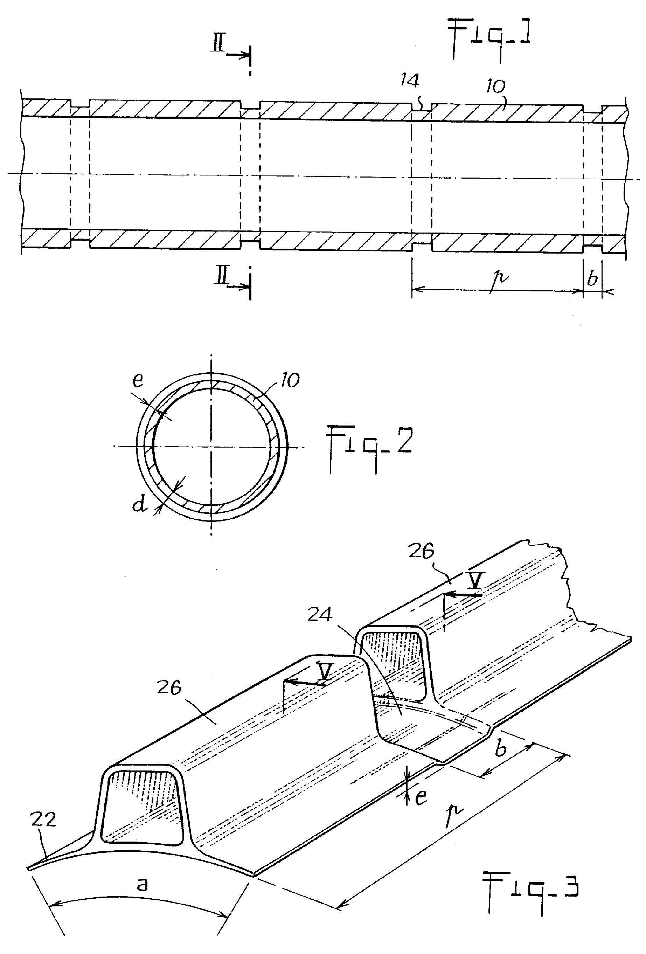

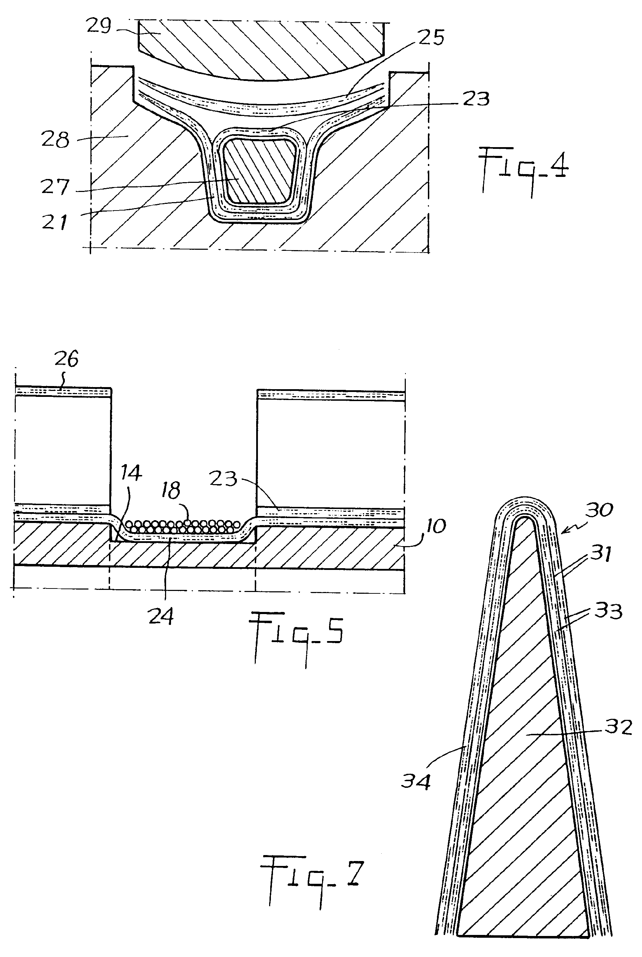

Un mode de réalisation de la préforme tubulaire à laquelle doivent être intégrés les supports d'aile est illustré par les figures 1 et 2. Cette préforme est destinée à former une virole, c'est-à-dire le corps cylindrique tubulaire qui délimite, avec des fonds avant et arrière, la chambre à l'intérieur de laquelle est disposé le propergol.

De façon connue en soi, la préforme tubulaire est formée par bobinage d'une texture fibreuse imprégnée d'un liant polymérisable tel qu'une résine époxy. La texture fibreuse est un fil, par exemple en carbone, bobiné sur un mandrin. En variante, le bobinage peut être réalisé directement sur le bloc de propergol, avec interposition éventuelle d'une couche de protection thermique, dès lors que la température de polymérisation du liant est suffisamment basse pour que la polymérisation puisse être effectuée en présence du propergol. Le bobinage filamentaire est réalisé en couches superposées. Dans certaines couches, le bobinage est réalisé hélicoïdalement, par exemple alternativement à droite et à gauche dans des couches superposées.

Comme le montre la figure 1, la préforme tubulaire 10 est formée de manière à présenter, à sa périphérie, des parties en creux formées par des gorges annulaires 14, destinées à recevoir des parties correspondantes de supports d'aile.

Les gorges annulaires 14 sont formées avec un pas $p$ en direction axiale. Chaque gorge a une largeur constante $b$ et une profondeur constante $e$ (figure 2).

Les gorges annulaires 14 sont obtenues en réalisant la partie extérieure de la préforme d'épaisseur $d$ par bobinage circonférentiel sur toute la longueur de la préforme à l'exception des emplacements des gorges.

La figure 3 illustre un support d'aile 20 destiné à être intégré à la préforme 10. Le support d'aile 20 comprend une base ou semelle 22 d'où font saillie des parties d'attache 26 en forme de caissons sur lesquels les flancs des ailes doivent être fixés.

Les parties d'attache sont réparties régulièrement le long du support d'aile 20 et sont séparées les unes des autres par des intervalles dans lesquels la semelle forme des parties en retrait 24.

La semelle 22 a une forme évolutive destinée à permettre son intégration à la périphérie de la préforme tubulaire en conservant sensiblement à la structure une continuité circonférentielle. C'est ainsi que la semelle 22 présente en section droite un profil arrondi avec une épaisseur qui va en s'amenuisant entre sa partie centrale, d'où font saillie les parties d'attache, et ses bords longitudinaux. De la sorte, la surface supérieure de la semelle, de chaque côté des parties d'attache, se raccorde progressivement à la surface extérieure de la préforme tubulaire. Les parties en retrait 24 sont réparties longitudinalement avec un pas $p$ égal à celui des gorges 14 et ont une largeur $b$ égale à celle des gorges 14. Quant à la distance entre la surface supérieure de la semelle 22, entre les parties en retrait, et la surface inférieure des parties en retrait 24, elle est égale à la profondeur $e$ des gorges 14.

Lorsqu'un support d'aile 20 est intégré longitudinalement à la préforme 10 (figure 5), les parties en retrait 24 pénètrent dans les gorges 14 en ménageant des gorges résiduelles. Comme indiqué plus loin, ces dernières sont comblées par un surbobinage circonférentiel 18 de sorte qu'une structure est obtenue qui présente une parfaite continuité circonférentielle et est lisse tant intérieurement qu'extérieurement, tout le long du propulseur. Le nombre et la largeur des gorges 14 sont choisis en fonction des efforts que doivent reprendre les ailes qui, par l'intégration des bases des supports d'aile à la périphérie de la préforme de la virole, participent à la rigidité du propulseur.

A titre indicatif, pour une préforme 10 de diamètre extérieur égal à 160 mm et d'épaisseur $d$ égale à 4,5 mm, on pourra prévoir des gorges 14 avec un pas $p$ égal à 120 mm, une largeur $b$ égale à 20 mm et une profondeur $e$ égale à 0,5 mm. Quant aux semelles 22, elles pourront s'étendre en direction circonférentielle sur un arc $a$ égal à 35°.

Comme le montre plus particulièrement la figure 4, le support d'aile 20 est formé par drapage de textures fibreuses, par exemple des textures en fibres de carbone, imprégnées d'un liant polymérisable tel qu'une résine époxy. Dans l'exemple illustré, les textures fibreuses utilisées forment trois sous-ensembles :

– un premier sous-ensemble 21 formant la partie extérieure du caisson 26 et comprenant des couches de texture bidimensionnelle bidirectionnelle (telle qu'un tissu) entre lesquelles sont disposées des couches de texture bidimensionnelle unidirectionnelle (telle qu'une nappe de fils orientés longitudinalement), le sous-ensemble 21 étant drapé au fond d'un moule 28,

– un deuxième sous-ensemble 23 de couches déposées sur le premier sous-ensemble 21, puis drapées autour d'un noyau 27 définissant l'intérieur du caisson, le deuxième sous-ensemble 23 étant formé, comme le premier sous-ensemble, de nappes unidirectionnelles situées entre des couches de tissu, et

– un troisième sous-ensemble de couches 25 drapées par dessus les premier et deuxième sous-ensembles pour former la semelle 22, ce troisième sous-ensemble étant également formé de nappes unidirectionnelles situées entre des couches de tissu.

L'ensemble est polymérisé dans un outillage formé par le moule 28 et un couvercle 29, et autour du noyau 27. Le fond du moule 28 a une forme appropriée pour former la semelle 22 avec les parties en retrait 24. Le couvercle 29 présente une face arrondie appliquée contre le sous-ensemble de couches 25 pour conférer à la semelle la courbure désirée. Le noyau 27 est avantageusement en un matériau à fort coefficient de dilatation afin de mettre sous pression les supports d'aile lors de la polymérisation. Après polymérisation, le noyau 27 est retiré puis les parties de caisson situées au droit des parties en retrait 24 sont éliminées par usinage.

Après mise en forme comme indiqué plus haut, les supports d'aile 20 sont intégrés à la préforme 10. A cet effet, les semelles 22 des supports d'aile sont intégrées à la périphérie de la virole avec interposition d'une colle. La colle utilisée est par exemple du type époxy.

L'assemblage ainsi réalisé (figures 5 et 6) est complété par un surbobinage circonférentiel réalisé par dessus les parties en retrait 24, logées dans les gorges 14. Le surbobinage est effectué au moyen d'un fil 18, par exemple en carbone imprégné de résine époxy, jusqu'à atteindre le diamètre extérieur de la préforme tubulaire et conférer à la structure obtenue un aspect extérieur lisse.

L'ensemble ainsi constitué est soumis à un cycle de polymérisation au cours duquel sont polymérisés le liant dont le fil de bobinage de la préforme tubulaire est imprégné, le liant dont le fil de surbobinage est imprégné et la colle interposée entre chaque support d'aile et la préforme. Une virole est ainsi obtenue avec une parfaite intégration des supports d'aile.

Chaque aile du propulseur est réalisée en matériau composite. Comme le montre la figure 7, chaque aile 30 est formée par drapage de textures fibreuses bidimensionnelles sur un gabarit 32. De la même façon que décrit plus haut, les textures fibreuses sont par exemple des textures en fibres de carbone imprégnées d'un liant polymérisable, tel qu'une résine époxy, et consistent en une combinaison de couches de tissu 31 alternant avec des nappes unidirectionnelles 33. Des nappes unidirectionnelles peuvent être disposées parallèlement et perpendiculairement à la direction longitudinale et une autre partie perpendiculairement à cette direction.

Après drapage, le liant est polymérisé tout en maintenant les couches drapées dans un outillage tel qu'un ensemble poinçon-matrice, le gabarit 32 pouvant former le poinçon.

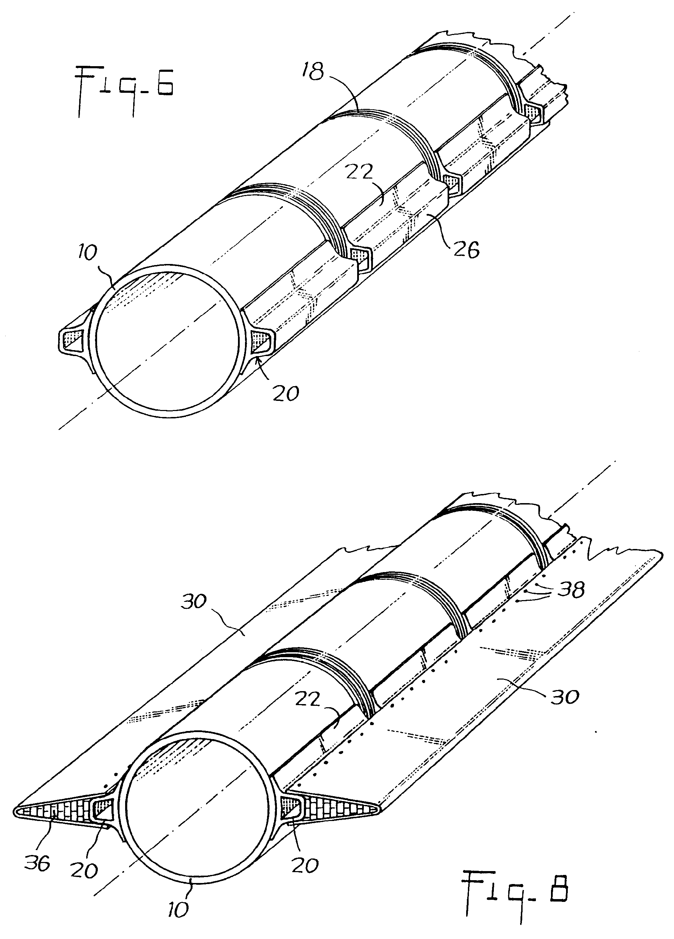

Une structure de renfort en nids d'abeilles 36 (figure 8) également en matériau composite peut être insérée entre les flancs 34 de l'aile, après retrait du gabarit 32, sauf entre les parties d'extrémité des flancs destinées à être fixées aux parties d'attache des supports d'aile.

Les ailes 30 renforcées intérieurement par la structure en nids d'abeilles 36 sont rapportées sur les supports d'aile par collage des parties d'extrémité des flancs sur les parois latérales longitudinales des parties d'attache 26 (figure 8). La colle utilisée est par exemple du type époxy.

Le collage peut être complété et/ou remplacé par mise en place de rivets 38.

Le procédé qui vient d'être décrit fait intervenir plusieurs opérations de polymérisation successives dans le temps. Comme cela est bien connu de l'homme de l'art, il est alors important que les polymérisations soient effectuées à des températures dont les valeurs ne vont pas en croissant.

Ainsi, l'ensemble formé par la préforme tubulaire avec les supports d'aile intégrés est soumis à un traitement de polymérisation à une température T2 inférieure ou égale à la température T1 à laquelle les supports d'aile ont été portés pour la polymérisation du liant imprégnant les textures fibreuses constituant les préformes des supports d'aile. Les températures T1 et T2 sont étroitement liées aux liants (résines) utilisés.

De même, si après montage des ailes, le collage nécessite une polymérisation, celle-ci est conduite à une température inférieure ou égale à T2 et à la température T'1 à laquelle les ailes ont été portées lors de l'opération de polymérisation à laquelle elles ont été soumises.

La réalisation du propulseur est ensuite terminée de façon connue en soi par mise en place du propergol, par exemple par coulée, et adjonction de fonds arrière et avant.

Avantageusement, l'alignement des caissons formés par les parties d'attache est mis à profit pour constituer un passage de service par exemple pour des conducteurs électriques destinés à acheminer des signaux entre l'avant et l'arrière du propulseur, ce qui peut éviter en particulier l'adjonction de gouttières à cet effet.

Le procédé décrit ci-dessus permet la réalisation d'un propulseur composite avec des ailes composites intégrées sans demander de surépaisseurs locales notables de la virole ou de structures métalliques d'ancrage des ailes, d'où un gain en masse de propergol et une réduction de la masse inerte.

De plus, les ailes participent à la rigidité de l'ensemble du propulseur, cette rigidité pouvant être modulée par action sur la stratification des ailes. En outre, la réalisation indépendante des ailes et de leurs supports permet de les optimiser.

Il a été envisagé ci-avant l'utilisation de textures fibreuses à base de fils de carbone imprégnées d'un liant polymérisable sous forme d'une résine époxy. Bien entendu, selon le cas, d'autres fibres pourraient être utilisées pour réaliser les textures fibreuses, par exemple des fibres organiques, céramiques ou métalliques, et d'autres matériaux pourraient être utilisés pour imprégner ou densifier les textures fibreuses, parmi des matériaux thermoplastiques, thermodurcissables, céramiques ou métalliques. En particulier, dans le cas où le propulseur est exposé en service à des échauffements cinétiques intenses, il est possible de réaliser les ailes et les supports d'aile en matériau composite à haute tenue thermique tel qu'un matériau composite à matrice céramique.

Enfin, une intégration totale des semelles des supports d'aile à la périphérie de la préforme tubulaire pourra être réalisée en formant à la surface extérieure de la préforme tubulaire, outre les gorges annulaires, des parties en retrait s'étendant longitudinalement et destinées à recevoir les semelles des supports d'aile le long des parties d'attache des ailes.

## Revendications

1. Procédé de fabrication d'un propulseur composite à ailes composites, caractérisé en ce qu'il comprend les étapes qui consistent à :

(a) réaliser séparément une préforme tubulaire, des ailes et des supports d'aile,

– les ailes et les supports d'aile étant réalisés par mise en forme au moins en partie par drapage de textures fibreuses imprégnées de liant polymérisable, suivi de la polymérisation du liant, tandis que la préforme tubulaire est réalisée au moins en partie par bobinage filamentaire avec imprégnation par un liant polymérisable,

– chaque support d'aile ayant une base destinée à être intégrée à la périphérie de la préforme tubulaire, et des parties d'attache d'aile faisant saillie de la base et espacées le long de celle-ci, et

– les bases des supports d'aile et la périphérie de la préforme tubulaire ayant des formes propres à assurer la continuité circonférentielle de la structure lorsque les bases sont intégrées à la préforme tubulaire,

(b) intégrer les supports d'aile à la préforme tubulaire en intégrant les bases des supports d'aile longitudinalement à la périphérie de la préforme tubulaire, ladite intégration étant réalisée par collage complété au moins par un surbobinage local aux emplacements des supports d'aile situés entre les parties d'attache des ailes, de sorte qu'une préforme de structure lisse intérieurement et extérieurement est obtenue,

(c) soumettre l'ensemble formé par la préforme tubulaire, les supports d'aile et le surbobinage à un traitement de polymérisation pour obtenir une virole, et

(d) assembler ensuite les ailes aux supports d'aile au moins par collage des flancs des ailes sur les parties d'attache des supports d'aile.

2. Procédé selon la revendication 1, caractérisé en ce que la base (22) de chaque support d'aile (20) présente des parties en retrait (24) situées entre les parties (26) d'attache des ailes et destinées à être disposées dans des gorges annulaires(14) qui sont formées à la périphérie de la virole(10) et dans lesquelles est réalisé ledit surbobinage.

3. Procédé selon l'une quelconque des revendications 1 à 2, caractérisé en ce que les supports d'aile (20) sont réalisés avec des parties d'attache en forme de caissons (26).

4. Procédé selon l'une quelconque des revendications 1 à 3, caractérisé en ce que l'assemblage des flancs des ailes (30) sur les parties d'attache (26) de supports d'aile (20) est réalisé par collage complété par rivetage.

5. Procédé selon l'une quelconque des revendications 1 à 4, caractérisé en ce qu'une structure de renfort en nid d'abeilles (36) est insérée entre les flancs des ailes (30).

6. Propulseur composite comprenant une virole (10) en matériau composite et des ailes (30) en matériau composite reliées à la virole au moyen de supports d'aile (20), caractérisé en ce que chaque support d'aile (20) est en matériau composite et comprend :

– une base (22) intégrée à la virole (10) en formant avec elle une structure présentant une continuité circonférentielle, l'intégration de la base à la virole étant réalisée par collage complété par un surbobinage local, et

– des parties d'attache (26) faisant saillie de la base et sur lesquelles les flancs d'une aile (30) sont assemblés au moins par collage.

7. Propulseur selon la revendication 6, caractérisé en ce que les bases (22) des supports d'aile (20) s'étendent parallèlement à l'axe, ont un profil ayant une courbure correspondant à celle de la virole (10), et présentent des parties en retrait (24) situées entre les parties d'attache des ailes et par-dessus lesquelles est réalisé le surbobinage local.

8. Propulseur selon l'une quelconque des revendications 6 et 7, caractérisé en ce que, dans les supports d'aile, les parties d'attache des ailes sont en forme de caissons (26).

9. Propulseur selon la revendication 8, caractérisé en ce que les parties d'attache d'aile d'un support d'aile(20) forment un passage de service le long du propulseur.

10. Propulseur selon l'une quelconque des revendications 6 à 9, caractérisé en ce que des structures en nids d'abeilles (36) sont disposées entre les flancs des ailes (30).

11. Propulseur selon l'une quelconque des revendications 6 à 10, caractérisé en ce que les flancs des ailes (30) sont assemblés aux parties d'attache (26) des supports d'aile par collage et rivetage.

**Patentansprüche**

1. Verfahren zur Herstellung eines Triebwerks aus Verbundwerkstoff mit Flügeln aus Verbundwerkstoff, **gekennzeichnet durch** die folgenden Stufen:

(a) Getrennte Herstellung eines röhrenförmigen Vorformlings, von Flügeln und von Flügelträgern, wobei

– die Flügel und die Flügelträger mindestens teilweise durch Übereinanderfalten von mit einem polymerisierbaren Bindemittel imprägnierten faserigen Texturen, gefolgt von der Polymerisation des Bindemittels, erzeugt werden, während der röhrenförmige Vorformling mindestens teilweise durch Filamentwicklung mit Imprägnieren durch ein polymerisierbares Bindemittel hergestellt wird,

– jeder Flügelträger ein Basisteil besitzt, das am Umfang des röhrenförmigen Vorformlings integriert wird und Befestigungsstellen für die Flügel, die vom Basisteil hervortreten und sich auf diesem unter Freilassen von Zwischenräumen befinden und

– die Basisteile der Flügelträger und der Umfang des röhrenförmigen Vorformlings Formen besitzen, die geeignet sind, die Gleichförmigkeit des Umfangs der Struktur zu gewährleisten, wenn die Basisstücke am röhrenförmigen Vorformling integriert werden,

(b) Integration der Flügelträger am röhrenförmigen Vorformling, indem die Basisteile der Flügelträger in Längsrichtung am Umfang des röhrenförmigen Vorformlings integriert werden, wobei diese Integration über eine Verklebung durchgeführt wird, die mindestens durch eine örtliche Aufwicklung an den Stellen der Flügelträger vervollständigt wird, die zwischen den Befestigungsstellen der Flügel liegen, so daß man einen Vorformling mit innen und außen geglätteten Strukturen erhält,

(c) Durchführung einer Polymerisationsbehandlung an der durch den röhrenförmigen Vorformling, den Flügelträgern und der Aufwicklung gebildeten gesamten Anordnung, wobei man einen Triebwerksmantel erhält und

(d) anschließend Anfügen der Flügel an den Flügelträgern durch mindestens Kleben der Seiten der Flügeln an den Befestigungsbereichen der Flügelträger.

2. Verfahren nach Anspruch 1, dadurch gekennzeichnet, daß der Basisteil (22) jedes Flügelträgers (20) abgesenkte Bereiche (24) aufweist, die sich zwischen den Befestigungsstellen (26) der Flügel befinden und die zwischen ringförmigen Auskehlungen (14) angeordnet werden sollen, die am Rand des Triebwerksmantels (10) ausgebildet sind und in denen die Aufwicklung durchgeführt wird.

3. Verfahren nach einem der Ansprüche 1 bis 2, dadurch gekennzeichnet, daß die Flügelträger (20) mit kassettenförmigen Befestigungsstellen hergestellt werden.

4. Verfahren nach einem der Ansprüche 1 bis 3, dadurch gekennzeichnet, daß die Befestigung der Seiten der Flügel (30) auf den Befestigungsbereichen (26) der Flügelträger (20) durch über Vernietung vervollständigte Verklebung durchgeführt wird.

5. Verfahren nach einem der Ansprüche 1 bis 4, dadurch gekennzeichnet, daß zwischen die Flügelseiten (30) eine wabenförmige Verstärkungsstruktur eingefügt ist.

6. Triebwerk aus Verbundwerkstoff mit einem Triebwerksmantel (10) aus Verbundwerkstoff und Flügeln (30) aus Verbundwerkstoff, die mit dem Triebwerksmantel mit Hilfe von Flügelträgern (20) verbunden sind, dadurch gekennzeichnet, daß jeder Flügelträger (20) aus Verbundwerkstoff besteht und folgende Teile umfaßt:

– Ein Basisteil (22). das am Triebwerksmantel (10) integriert ist, wobei mit diesem eine Struktur mit Gleichförmigkeit des Umfangs gebildet wird und die Integration des Basisteils am Triebwerksmantel durch mit einer örtlichen Wicklung vervollständigten Verklebung durchgeführt wird und

– Befestigungsstellen (26), die vom Basisteil hervorstehen und auf denen die Seiten eines Flügels (30) mindestens durch Verkleben befestigt werden.

7. Triebwerk nach Anspruch 6, dadurch gekennzeichnet, daß die Basisteile (22) der Flügelträger (20) sich parallel der Achse erstrecken, ein Profil mit einer der dem Triebwerksmantel (10) entsprechenden Krümmung aufweisen und abgesenkte Bereiche (24) besitzen, die sich zwischen den Befestigungsstellen der Flügeln befinden und auf denen die örtliche Aufwicklung durchgeführt wird.

8. Triebwerk nach einem der Ansprüche 6 und 7, dadurch gekennzeichnet, daß die Befestigungsstellen der Flügel auf den Flügelträgern kastenförmig sind (26).

9. Triebwerk nach Anspruch 8, dadurch gekennzeichnet, daß die Befestigungsstellen der Flügel eines Flügelträgers (20) längs dem Triebwerk einen Durchgang für Instandhaltungsarbeiten bilden.

10. Triebwerk nach einem der Ansprüche 6 bis 9, dadurch gekennzeichnet, daß die wabenförmigen Strukturen (36) sich zwischen den Flügelseiten (30) befinden.

11. Triebwerk nach einem der Ansprüche 6 bis 10, dadurch gekennzeichnet, daß die Flügelseiten (30) durch Verkleben und Vernieten an den Befestigungsstellen (26) der Flügelträgern befestigt werden.

**Claims**

1. Method of manufacturing a composite rocket motor having composite fins, characterized in that it comprises the steps consisting in:

(a) separately producing a tubular preform, fins, and fin supports,

– the fins and the fin supports being formed at least in part by appropriately laying fibrous cloths impregnated with polymerizable binder, followed by polymerizing the binder, while the tubular preform is made at least in part by winding threads and by impregnation using a polymerizable binder;

– each fin support including a base for integrating with the periphery of the tubular preform, and fin attachment portions projecting from the base and spaced apart therealong; and

– the bases of the fin supports and the periphery of the tubular preform being shaped in such a manner as to ensure circumferential continuity of the structure when the bases are integrated with the tubular preform;

(b) integrating the fin supports to the tubular preform by integrating the bases of the fin supports longitudinally to the periphery of the tubular preform, said integration being performed by gluing together with at least one localized overwinding operation at the locations on the fin supports situated between the fin attachment portions, such that a preform is obtained which is smooth in structure internally and externally;

(c) subjecting the assembly constituted by the tubular preform, the fin supports, and the overwinding to a polymerization treatment in order to obtain a tube; and

(d) subsequently assembling the fins to the fin supports at least by gluing the sides of the fins to the attachment portions of the fin supports.

2. Method according to claim 1, characterized in that the base (22) of each fin support (20) has set-back portions (24) situated between the fin attachment portions (26) and intended to be disposed in annular grooves (14) formed in the periphery of the tube (10) and in which said overwinding is performed.

3. Method according to any one of claims 1 to 2, characterized in that the fin supports (20) are made with attachment portions in the form of box sections (6).

4. Method according to any one of claims 1 to 3, characterized in that the sides of the fins (30) are assembled to the attachment portions (26) of the fin support (20) by gluing, completed by riveting.

5. Method according to any one of claims 1 to 4, characterized in that a honeycomb reinforcing structure (36) is inserted between the sides of the fins (30).

6. Composite rocket motor comprising a tube (10) made of composite material and fins (30) made of composite material connected to the tube by means of fin supports (20), characterized in that each fin support (20) is made of composite material and comprises:

– a base (22) integrated with the tube (10) for forming therewith a structure having circumferential continuity, with the base being integrated with the tube by gluing together with localized overwinding; and

– attachment portions (26) projecting from the base and on which the sides of a fin (30) are assembled by means of gluing.

7. Rocket motor according to claim 6, characterized in that the bases (22) of the fin supports (20) extend parallel to the axis, have a profile whose curvature corresponds to the curvature of the tube (10), and have set-back portions (24) situated between the fin attachment portions and over which the localized overwinding is performed.

8. Rocket motor according to any one of claims 6 and 7, characterized in that the fin attachment portions in the fin supports are in the form of box sections (26).

9. Rocket motor according to claim 8, characterized in that the fin attachment portions of a fin support (20) form a service passage running along the length of the rocket motor

10. Rocket motor according to any one of claims 6 to 9, characterized in that honeycomb structures (36) are disposed between the sides of the fins (30).

11. Rocket motor according to any one of claims 6 to 10, characterized in that the sides of the fins (30) are assembled to the attachment portions (26) of the fin supports by gluing and riveting.

Fig_1

II

14      10

p      b

II

Fig_2

e

10

d

Fig_3

26

V

24

V

26

b

e

p

22

a

29  25

23

28

27

21

Fig-4

26

14  18  23

10

24

Fig-5

30

31

33

32

34

Fig-7

Fig-6

Fig-8